# EUROPÄISCHE PATENTANMELDUNG

(11) **EP 4 528 242 A1**
(43) Veröffentlichungstag der Anmeldung: **26.03.2025**
(21) Anmeldenummer: 24201545.1
(22) Anmeldetag: 20.09.2024
(51) Int. Cl.: G01L 1/24, G01D 5/353, G02B 6/02

(54) **MESSVORRICHTUNG UND VERFAHREN ZU DEREN HERSTELLUNG UND VERWENDUNG**

(30) Priorität: 22.09.2023 DE 102023209311
(71) Anmelder: Fraunhofer-Gesellschaft zur Förderung der angewandten Forschung e.V., 80686 München (DE)
(72) Erfinder: SCHADE, Wolfgang, 38640 Goslar (DE); KOCH, Jannis, 38640 Goslar (DE); ANGELMAHR, Martin, 38640 Goslar (DE)
(74) Vertreter: Friese Goeden Patentanwälte PartGmbB

(57) **Zusammenfassung**

Die Erfindung betrifft eine Messvorrichtung (1) mit zumindest einem Substrat (10), welches ein Polymer oder ein Glas enthält oder daraus besteht, wobei im Substrat zumindest ein optischer Wellenleiter (3) eingeschrieben ist, in welchem zumindest ein Bragg-Gitter (35) mit einer vorgebbaren Gitterkonstanten angeordnet ist, wobei die Messvorrichtung (1) weiterhin eine Auswerteeinrich-tung (4) enthält, welche dazu eingerichtet ist, aus einer Änderung der Gitterkonstanten und/oder einer Änderung des Brechungsindex des Bragg-Gitters eine Verformung des Substrates und/oder eine auf das Substrat einwirkende Kraft zu bestimmen, wobei das Bragg-Gitter (35) und/oder der Wellenleiter einen elliptischen Querschnitt aufweist, und die längere Achse (350) des elliptischen Querschnitts einen festen Winkel zum Normalenvektor der durch das Substrat (10) definierten Ebene einnimmt. Weiterhin betrifft die Erfindung Verfahren zur Herstellung und Verwendung solcher Messvorrichtungen (1).

## Beschreibung

Die Erfindung betrifft eine Messvorrichtung mit zumindest einem Substrat, welches ein Polymer oder ein Glas enthält oder daraus besteht, wobei im Substrat zumindest ein optischer Wellenleiter eingeschrieben ist, in welchem zumindest ein Bragg-Gitter mit einer vorgebbaren Gitterkonstanten angeordnet ist. Weiterhin betrifft die Erfindung Verfahren zur Herstellung und Verwendung solcher Messvorrichtungen.

Aus der US 2004/0074307 A1 ist bekannt, eine Glasfaser mit einem Faser-Bragg-Gitter zu versehen. Die Glasfaser soll in eine Mehrzahl von Materiallagen eingebettet werden, wobei diese Materiallagen aus einem Polymer bestehen. Wirkt eine Kraft senkrecht zu den Schichten und der Glasfaser, so wird das Faser-Bragg-Gitter deformiert. Diese Deformation bewirkt eine Änderung der Gitterkonstanten des Faser-Bragg-Gitters, wodurch sich die Reflexion und die Transmission ändern. Diese Änderung kann optisch ausgelesen werden, sodass die einwirkende Kraft hieraus bestimmt werden kann.

Diese bekannte Messvorrichtung weist den Nachteil auf, dass die Glasfaser einerseits und die umgebenden polymeren Schichten andererseits nicht die gleichen mechanischen Eigenschaften aufweisen, insbesondere nicht den gleichen Elastizitätsmodul. Bei Einwirkung einer Kraft erfahren somit die Polymerschichten eine andere Kompression als die Glasfaser. Dies führt zu einem nicht-linearen Verhalten der Änderung der Gitterkonstanten des Faser-Bragg-Gitters in Abhängigkeit der aufgewandten Kraft. Weiterhin ist eine präzise Bestimmung der Kraft nur dann möglich, wenn diese genau über dem Faser-Bragg-Gitter einwirkt. Sofern der Angriffspunkt der Kraft innerhalb der Fläche der Messvorrichtung verschoben ist, kann die Kraft nicht mehr zuverlässig bestimmt werden.

Gemäß einem Aspekt der vorliegenden Erfindung wird eine Messvorrichtung vorgeschlagen. Die Messvorrichtung kann zumindest ein Substrat enthalten oder daraus bestehen. Das Substrat kann ein flächiges Element sein, dessen Dicke geringer sein kann als die Ausdehnung in der Länge und/oder der Breite. Das Substrat kann aus einem transparenten oder transluzenten Material bestehen. Dies bedeutet, dass das Substrat für zumindest einen Teilbereich des elektromagnetischen Spektrums zumindest teilweise durchlässig ist. In einigen Ausführungsformen der Erfindung kann dieser Teilbereich des elektromagnetischen Spektrums aus dem infraroten und/oder sichtbaren Spektralbereich gewählt sein.

Das Substrat kann in einigen Ausführungsformen der Erfindung eine Länge und/oder eine Breite von etwa 1 cm bis etwa 50 cm oder von etwa 2 cm bis etwa 20 cm oder von etwa 3 cm bis etwa 10 cm oder von etwa 4 cm bis etwa 6 cm aufweisen. Das Substrat bzw. dessen Grundfläche kann polygonal oder rund oder oval geformt sein.

In einigen Ausführungsformen der Erfindung kann das Substrat ein Polymer oder ein Glas enthalten oder daraus bestehen. Das Substrat kann homogen aufgebaut sein. In anderen Ausführungsformen der Erfindung kann das Substrat aus einer Mehrzahl von Schichten aufgebaut sein, welche aus identischen oder verschiedenen Materialien bestehen. In einigen Ausführungsformen können sich die Schichten durch ihren Brechungsindex unterscheiden, welcher beispielsweise durch Dotierstoffe und/oder Bestrahlung beeinflusst werden kann.

In einigen Ausführungsformen der Erfindung kann im Substrat zumindest ein optischer Wellenleiter eingeschrieben sein. Der Wellenleiter nimmt ein Teilvolumen des Substrates ein und ist insofern im Substrat eingebettet oder eingeschrieben. Das Teilvolumen des Wellenleiters weist einen geänderten Brechungsindex gegenüber dem Material des Substrates auf, sodass Licht, welches im Wellenleiter propagiert, an der Grenzfläche zum Substrat totalreflektiert wird. Insofern stellt das flächige Substrat den Mantel des Wellenleiters dar. In einigen Ausführungsformen der Erfindung kann der geänderte Brechungsindex des Wellenleiters bzw. des Kerns des Wellenleiters größer sein als der Brechungsindex des Substrates.

Der Wellenleiter bzw. dessen Kern enthält weiterhin zumindest ein Bragg-Gitter mit einer vorgebbaren Gitterkonstanten. Das Bragg-Gitter besteht aus einer Mehrzahl von Teilvolumina bzw. Voxeln, welche innerhalb des Kerns des Wellenleiters oder im Evaneszenzbereich neben dem Kern des Wellenleiters angeordnet sind. Die einzelnen Teilvolumina bzw. Voxel weisen einen gegenüber dem Kern geänderten Brechungsindex auf. Der Abstand der einzelnen Teilvolumina bzw. Voxel definiert die Gitterkonstante des Bragg-Gitters. In einigen Ausführungsformen der Erfindung kann der geänderte Brechungsindex der Teilvolumina bzw. Voxel des Bragg-Gitters größer sein als der Brechungsindex des Wellenleiters bzw. des Kerns.

Das Bragg-Gitter hat die Wirkung, dass ein durch die Gitterkonstante definiertes Teilspektrum des im Wellenleiter propagierenden Lichtes reflektiert wird. Licht anderer Wellenlänge wird durch das Bragg-Gitter transmittiert. Sofern eine Kraft entlang des Normalenvektors des Substrates auf das Substrat einwirkt, wird das Bragg-Gitter im Wellenleiter innerhalb des Substrates verformt. Diese Verformung führt zu einer Ändeurng der Gitterkonstanten und/oder einer Änderung des Brechungsindex des Bragg-Gitters und kann spektroskopisch anhand der Wellenlänge des reflektierten bzw. transmittierten Lichtes erfasst werden.

Die vorgeschlagene Messvorrichtung kann hierzu weiterhin eine Auswerteeinrichtung enthalten, welche dazu eingerichtet ist, aus der Änderung der Gitterkonstanten eine Verformung des Substrates und/oder die auf das Substrat einwirkende Kraft zu bestimmen. In einigen Ausführungsformen der Erfindung kann der Zusammenhang zwischen der Änderung der Gitterkonstanten des Bragg-Gitters und der Verformung bzw. der einwirkenden Kraft linear sein. Diese Linearität kann ihre Ursache in der Homogenität der Messvorrichtung finden. Wenn nämlich das Substrat einerseits und der darin befindliche Wellenleiter andererseits dasselbe Material mit denselben mechanischen Eigenschaften aufweisen, erfährt das Substrat einerseits und der darin eingeschriebene oder eingebettete Wellenleiter mit dem darin befindlichen Bragg-Gitter stets dieselbe Verformung. Dies kann ein Unterschied zu bekannten Messvorrichtungen sein, bei welchen der Wellenleiter einerseits und das Substrat andererseits aus unterschiedlichen Materialien mit unterschiedlichen Elastizitätsmodulen bestehen. In diesem Fall ist die Verformung unter identischer Kraft jeweils unterschiedlich, was zu nicht-linearem Verhalten der Messvorrichtung führt.

In einigen Ausführungsformen der Erfindung kann das Bragg-Gitter einen elliptischen Querschnitt aufweisen. In anderen Ausführungsformen der Erfindung kann der Wellenleiter einen elliptischen Querschnitt aufweisen. In wiederum anderen Ausführungsformen der Erfindung kann der Wellenleiter und zumindest ein darin befindliches Bragg-Gitter einen elliptischen Querschnitt aufweisen. Dabei kann die längere Achse des elliptischen Querschnitts einen festen Winkel zum Normalenvektor der durch das Substrat definierten Ebene einnehmen.

In einigen Ausführungsformen der Erfindung kann die Messvorrichtung eine Mehrzahl von Wellenleitern enthalten. In einigen Ausführungsformen der Erfindung kann die Anzahl der Wellenleiter zwischen etwa 2 und etwa 10 oder zwischen etwa 3 und etwa 7 betragen. In einigen Ausführungsformen der Erfindung kann ein einzelner Wellenleiter eine Mehrzahl von Bragg-Gittern enthalten. In einigen Ausführungsformen der Erfindung kann die Anzahl der Bragg-Gitter zwischen etwa 2 und etwa 10 oder zwischen etwa 3 und etwa 7 betragen. Die einzelnen Bragg-Gitter innerhalb eines Wellenleiters können unterschiedliche Gitterkonstanten aufweisen, sodass diese im Wellenlängenmultiplex unterscheidbar sind. Durch mehrere Wellenleiter und/oder mehrere Bragg-Gitter kann eine Kraftverteilung innerhalb der durch das Substrat definierten Ebene der Messvorrichtung erfasst werden.

Das Substrat kann in einigen Ausführungsformen der Erfindung eben sein und auf diese Weise die Krafteinwirkung bzw. den Druck innerhalb einer ebenen Fläche erfassen. In anderen Ausführungsformen der Erfindung kann das Substrat in einer oder mehreren Richtungen gekrümmt sein und solchermaßen die Krafteinwirkung auf einen gekrümmten Körper erfassen, beispielsweise einen Zylinder oder eine Kugel oder eine Freiformfläche.

In einigen Ausführungsformen der Erfindung kann das Substrat eine Dicke von weniger als 200 pm aufweisen. In anderen Ausführungsformen der Erfindung kann das Substrat eine Dicke von weniger als etwa 120 pm aufweisen. In wiederum anderen Ausführungsformen der Erfindung kann das Substrat eine Dicke von weniger als etwa 90 pm aufweisen. In einigen Ausführungsformen der Erfindung kann das Substrat eine Dicke von mehr als etwa 40 pm aufweisen. In anderen Ausführungsformen der Erfindung kann das Substrat eine Dicke von mehr als etwa 50 pm aufweisen. In wiederum anderen Ausführungsformen der Erfindung kann das Substrat eine Dicke von mehr als etwa 60 pm aufweisen. Substrate dieser Größe sind einerseits durch einwirkende Kräfte verformbar, sodass die Kräfte zuverlässig erfasst werden können. Andererseits ermöglichen diese Substrate eine einfache Integration in bestehende mechanische Komponenten, um die auf diese Komponenten einwirkenden Kräfte zu erfassen.

In einigen Ausführungsformen der Erfindung kann der Wellenleiter einen elliptischen Querschnitt aufweisen. In anderen Ausführungsformen der Erfindung kann der Wellenleiter einen runden Querschnitt aufweisen. Ein solcher Wellenleiter kann in einfacher Weise durch Materialbearbeitung mit einem Laser erzeugt werden, welcher den Wellenleiter durch Punkt-zu-Punkt-Belichten in das Substrat einschreibt, indem die durch den Laser bestrahlten Teilbereiche einen geänderten Brechungsindex aufweisen.

In einigen Ausführungsformen der Erfindung kann das Bragg-Gitter einen elliptischen Querschnitt aufweisen, wobei die längere Achse etwa parallel oder etwa senkrecht zum Normalenvektor der durch das Substrat definierten Ebene verläuft. Sofern das Substrat gekrümmt ist, kann die längere Achse parallel oder senkrecht zum Normalenvektor am Ort des Bragg-Gitters sein. Dieses Merkmal hat die Wirkung, dass sich beim Aufbringen einer Kraft in Richtung des Normalenvektors der durch das Substrat definierten Ebene die Winkel zwischen der längeren Achse des Bragg-Gitters und dem Normalenvektor nicht ändern. Dadurch kann bei der Verwendung von polarisiertem Licht die Erfassung der Beziehung zwischen der Größe der applizierten Kraft und dem Reflexionsverhalten des Bragg-Gitters mit höherer Genauigkeit erfolgen.

In einigen Ausführungsformen der Erfindung kann der Wellenleiter und/oder das Bragg-Gitter durch Bearbeitung des Substrates mit einem Kurzpulslaser erhältlich sein. Durch die Laserstrahlung wird das Substratmaterial in den bestrahlten Teilbereichen so verändert, dass dieses einen anderen Brechungsindex aufweist. Hierdurch können die gewünschten Wellenleiter und/oder Bragg-Gitter durch Punkt-zu-Punkt-Belichten oder durch Verwendung einer Maske in das Substrat eingeschrieben werden.

In einigen Ausführungsformen der Erfindung kann der Wellenleiter und das Bragg-Gitter monolithisch im Substrat integriert sein. Von einer monolithischen Integration wird im Sinne der vorliegenden Erfindung dann gesprochen, wenn der Elastizitätsmodul von Wellenleiter einerseits und Substrat andererseits im Wesentlichen identisch ist, weil der Wellenleiter einerseits und das Substrat andererseits im Wesentlichen aus dem gleichen Material bestehen, welches allenfalls durch Lasermaterialbearbeitung oder Dotierung im Brechungsindex geändert ist. Eine solche monolithische Integration führt zu einem identischen Elastizitätsmodul der Komponenten, sodass eine einwirkende Kraft das Substrat einerseits und den Wellenleiter andererseits in identischer Weise verformt.

In einigen Ausführungsformen der Erfindung kann die Messvorrichtung weiterhin eine Lichtquelle enthalten, mit welcher Licht in den Wellenleiter einkoppelbar ist. Die Lichtquelle kann in einigen Ausführungsformen der Erfindung eine breitbandige Lichtquelle sein, beispielsweise eine Superlumineszenzdiode. In anderen Ausführungsformen der Erfindung kann die Lichtquelle eine schmalbandige Lichtquelle sein, beispielsweise ein Halbleiterlaser. Das in den Wellenleiter eingekoppelte Licht kann dort propagieren und am Bragg-Gitter zumindest teilweise reflektiert werden.

In einigen Ausführungsformen der Erfindung kann die Messvorrichtung weiterhin ein Spektrometer enthalten, mit welchem das am Bragg-Gitter reflektierte Spektrum und/oder das durch das Bragg-Gitter transmittierte Spektrum bestimmbar ist. Auf diese Weise kann aus dem reflektierten und/oder transmittierten Licht die Gitterkonstante des Bragg-Gitters bestimmt werden. Eine Änderung der Gitterkonstante des Bragg-Gitters aufgrund von Verformung kann zur Bestimmung der einwirkenden Kraft oder der mechanischen Spannung oder der Verformung dienen.

In einigen Ausführungsformen der Erfindung kann das Substrat ein Alumosilikatglas enthalten oder daraus bestehen. Dieses kann durch Kurzpulslaser in besonders einfacher Weise bearbeitet werden.

Gemäß einem weiteren Aspekt der Erfindung betrifft diese ein Verfahren zur Erfassung einer Verformung und/oder einer einwirkenden Kraft. Zur Durchführung des Verfahrens wird eine Messvorrichtung verwendet, welche zumindest ein Substrat enthält. Das Substrat kann in einigen Ausführungsformen der Erfindung ein Polymer oder ein Glas enthalten oder daraus bestehen. Im Substrat kann zumindest ein Wellenleiter eingeschrieben sein. Der Wellenleiter ist dazu eingerichtet und bestimmt, dass bei Durchführung des Verfahrens eingekoppeltes Licht innerhalb des Wellenleiters propagiert. Hierzu kann der Wellenleiter einen gegenüber dem Substrat veränderten Brechungsindex aufweisen, sodass Licht an den Grenzflächen zwischen Wellenleiter und Substrat totalreflektiert wird.

Im Wellenleiter kann sich weiterhin zumindest ein Bragg-Gitter mit einer vorgebbaren Gitterkonstante befinden. Das Bragg-Gitter ist dazu eingerichtet und bestimmt, einen Teil des elektromagnetischen Spektrums zu reflektieren, wohingegen ein anderer Teil des elektromagnetischen Spektrums transmittiert wird, wie vorstehend in Verbindung mit der Messvorrichtung näher beschrieben.

Bei Durchführung des Verfahrens kann das Substrat mit einer Kraft beaufschlagt werden, welche zumindest eine Komponente aufweist, welche parallel zum Normalenvektor des Substrates verläuft. Diese Kraft führt zu einer Dehnung und/oder Stauchung des Bragg-Gitters und damit zu einer Änderung der Gitterkonstanten. Aus der Änderung der Gitterkonstanten kann somit eine Verformung des Substrates und/oder die Größe der auf das Substrat einwirkenden Kraft bestimmt werden.

In einigen Ausführungsformen des Verfahrens kann das am Bragg-Gitter reflektierte Spektrum bestimmt werden. In anderen Ausführungsformen der Erfindung kann das am Bragg-Gitter transmittierte Spektrum bestimmt werden. In wiederum anderen Ausführungsformen kann sowohl das reflektierte Spektrum als auch das transmittierte Spektrum gemessen werden.

In einigen Ausführungsformen der Erfindung kann ein uniaxialer Druck senkrecht zum Verlauf des Wellenleiters gemessen werden. In einigen Ausführungsformen der Erfindung kann darüber hinaus durch eine Mehrzahl von Wellenleitern und/oder eine Mehrzahl von Bragg-Gittern eine Druck- oder Kraftverteilung über die Fläche des Substrates bestimmt werden.

In einigen Ausführungsformen der Erfindung kann das Substrat in einer oder mehreren Richtungen gekrümmt sein, so dass die Verformung einer zum Substrat komplementär gekrümmten Fläche bestimmt werden kann. In einigen Ausführungsformen der Erfindung kann das Substrat in einer oder mehreren Richtungen gekrümmt sein, so dass die auf eine zum Substrat komplementär gekrümmte Fläche einwirkende Kraft bestimmt werden kann.

In einem weiteren Aspekt betrifft die Erfindung ein Verfahren zur Herstellung einer Messvorrichtung. Hierzu kann zunächst ein Substrat bereitgestellt werden, welches beispielsweise aus einem Polymer oder einem Glas bestehen kann. Das Substrat kann in Breite und Länge eine Ausdehnung aufweisen, welche größer ist als die Dicke. Zur Herstellung der Messvorrichtung kann das Substrat in Teilflächen mit Laserstrahlung bestrahlt werden, welche im Substratmaterial einen Fokuspunkt bildet und in einigen Ausführungsformen der Erfindung eine Pulslänge von etwa 50 fs bis etwa 500 fs aufweist. Durch gleichzeitiges Bewegen des Substrates senkrecht zur Strahlausdehnung kann im bestrahlten Volumen des Substrates durch Punkt-zu-Punkt-Belichtung ein Wellenleiter entstehen. Der Wellenleiter bzw. dessen Kern weist im Wesentlichen ein Teilvolumen des Substrates auf, welches einen gegenüber dem unbestrahlten Substratmaterial veränderten Brechungsindex aufweist. Der Fokuspunkt kann hierzu in einigen Ausführungsformen der Erfindung etwa 20 pm bis etwa 80 pm unterhalb der Oberfläche des Substrates liegen. In anderen Ausführungsformen der Erfindung kann der Fokuspunkt etwa 50 pm bis etwa 70 pm unterhalb der Oberfläche des Substrates liegen.

In einigen Ausführungsformen der Erfindung kann sodann durch erneutes Bestrahlen des bereits bestrahlten Volumens des Substrates im Wellenleiter bzw. im Kern des Wellenleiters eine Mehrzahl von Teilvolumina bzw. Voxeln hergestellt werden, welche einen gegenüber dem bestrahlten Volumen nochmals veränderten, beispielsweise erhöhten Brechungsindex aufweisen. Die Mehrzahl von Teilvolumina bzw. Voxeln kann in einem vorgebbaren Abstand zueinander angeordnet sein. Hierdurch entsteht ein Bragg-Gitter mit einer durch den Abstand der Voxel definierten Gitterkonstanten.

In einigen Ausführungsformen der Erfindung kann die Laserstrahlung eine Pulsenergie von etwa 0,8 pJ bis etwa 1,1 pJ aufweisen. In anderen Ausführungsformen der Erfindung kann die Laserstrahlung eine Pulsenergie von etwa 0,95 pJ bis etwa 1,1 pJ aufweisen In einigen Ausführungsformen der Erfindung kann die Repetitionsrate der Laserstrahlung zwischen etwa 4 kHz und etwa 6 kHz betragen. In einigen Ausführungsformen der Erfindung kann die Laserstrahlung zirkular polarisiert sein. In einigen Ausführungsformen der Erfindung kann die Laserstrahlung eine Wellenlänge von etwa 700 nm bis etwa 900 nm aufweisen. In anderen Ausführungsformen der Erfindung kann die Laserstrahlung eine Wellenlänge von etwa 750 nm bis etwa 850 nm aufweisen. In einigen Ausführungsformen der Erfindung kann die Laserstrahlung während der Herstellung der Messvorrichtung zwischen etwa 60 pm und etwa 80 µm tief in das Substrat fokussiert werden. In einigen Ausführungsformen der Erfindung kann die Laserstrahlung mit einem Objektiv fokussiert werden.

Nachfolgend soll die Erfindung ohne Beschränkung des allgemeinen Erfindungsgedankens näher erläutert werden. Dabei zeigt
- Figur 1: ein Ausführungsbeispiel einer Messvorrichtung im Längsschnitt.
- Figur 2: zeigt die Messvorrichtung gemäß Figur 1 in einem ersten Querschnitt.
- Figur 3: zeigt die Messvorrichtung gemäß Figur 1 in einem zweiten Querschnitt.
- Figur 4: zeigt die Messvorrichtung gemäß Figur 1 in einer ersten isometrischen Darstellung.
- Figur 5: zeigt die Messvorrichtung gemäß Figur 1 in einer zweiten isometrischen Darstellung.
- Figur 6: zeigt die beispielhafte Verwendung der Messvorrichtung.
- Figur 7: beispielhaft die Auswertung der mit der Messvorrichtung erhaltenen Messwerte.

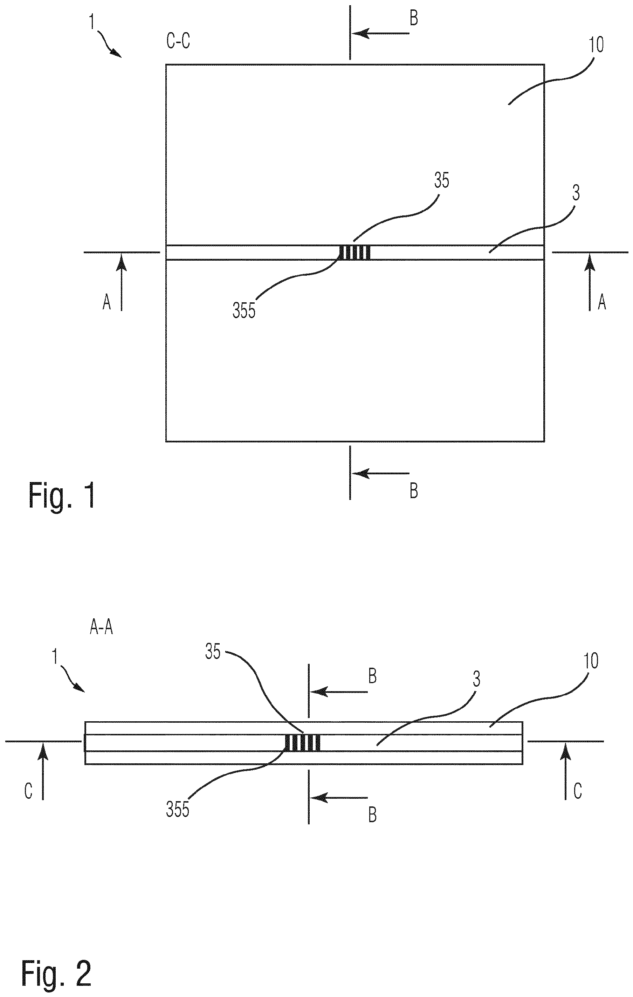

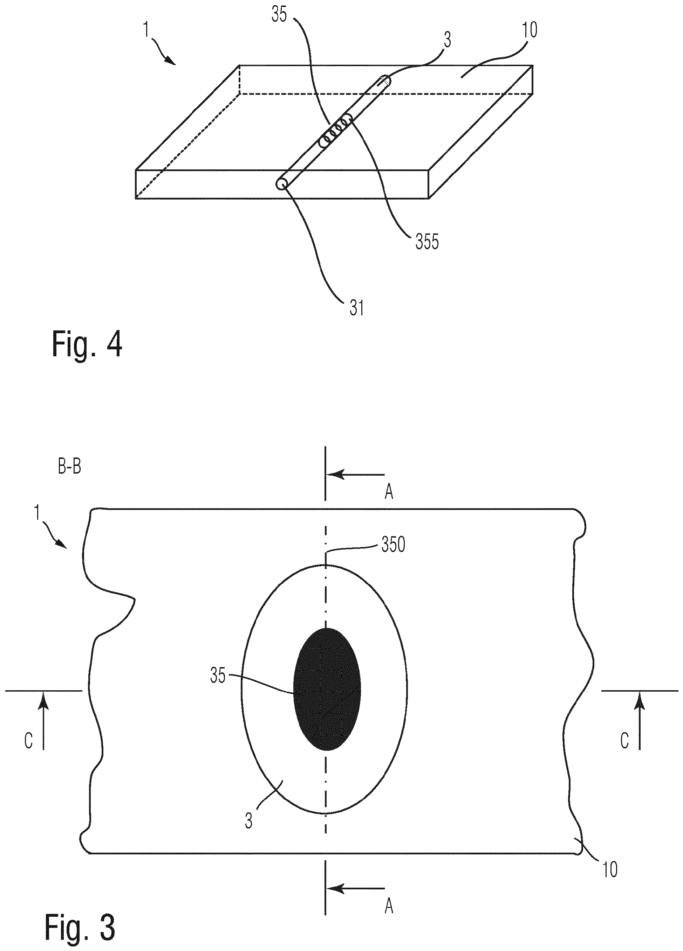

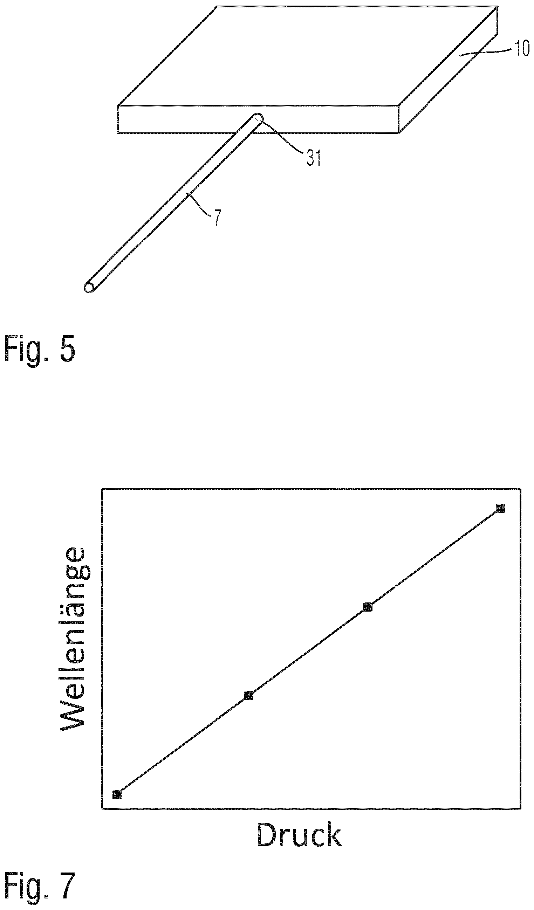

Anhand der Figuren 1 bis 5 wird eine beispielhafte Ausführungsform einer Messvorrichtung näher erläutert. Dabei zeigen die Figuren 1, 2 und 3 verschiedene Schnitte durch die Messvorrichtung, Figur 4 zeigt eine teilweise geschnittene isometrische Ansicht und Figur 5 zeigt eine ungeschnittene isometrische Ansicht. Gleiche Bestandteile der Erfindung sind durchgängig mit gleichen Bezugszeichen versehen, sodass nicht sämtliche Merkmale der Erfindung im Zusammenhang mit sämtlichen Figuren näher erläutert werden.

Die Messvorrichtung 1 enthält ein Substrat 10. Das Substrat 10 weist eine Oberseite und eine Unterseite auf, welche über schmälere Seitenflächen miteinander verbunden sind. Im dargestellten Ausführungsbeispiel ist das Substrat 10 quadratisch. Das Substrat 10 kann auch andere polygonale, runde oder elliptische Grundformen annehmen. Das Substrat 10 kann eine Länge und eine Breite von beispielsweise jeweils etwa 1 cm bis etwa 10 cm aufweisen. Das Substrat 10 kann eine Dicke von beispielsweise etwa 40 pm bis etwa 200 pm aufweisen.

Das Substrat 10 kann aus einem Polymer oder einem Glas gefertigt sein, beispielsweise einem Alumosilikatglas. Das Substrat kann einen Dotierstoff enthalten, welcher einen vorgebbaren Brechungsindex ermöglichen kann.

Im Substrat 10 befindet sich ein Wellenleiter 3. Im dargestellten Ausführungsbeispiel verläuft der Wellenleiter 3 geradlinig von einer ersten Seitenkante zu einer gegenüberliegenden zweiten Seitenkante. In anderen Ausführungsbeispielen kann der Wellenleiter auch gekrümmt sein. In wiederum anderen Ausführungsformen können mehrere Wellenleiter 3 im Substrat vorhanden sein. Die Erfindung lehrt nicht die Verwendung von genau einem geradlinigen Wellenleiter als Lösungsprinzip.

Der Wellenleiter 3 wird durch Punkt-zu-Punkt-Belichten mit einem Kurzpulslaser in das Substrat 10 eingeschrieben. Hierzu wird Laserstrahlung verwendet, welche eine Wellenlänge von 800 nm, eine Repetitionsrate von 5 kHz, eine Pulsdauer von 100 fs sowie einen Durchmesser von 6 mm aufweist. Die Laserstrahlung ist zirkular polarisiert. Die Pulsenergie eines Einzelpulses beträgt 1,01 uJ. Die Laserstrahlung wird über eine Blende senkrecht zur optischen Achse des späteren Wellenleiters 3 auf einen Durchmesser von 0,75 mm reduziert. Anschließend wird der Spalt über ein Objektiv mit einem Verkleinerungsfaktor von etwa 20 und einer numerischen Apertur von 0,4 etwa 70 µm tief in das Substrat 10 fokussiert. Anschließend wird das Substrat mit einer Geschwindigkeit von etwa 2 mm/s senkrecht zur eintreffenden Laserstrahlung bewegt. Hierbei entsteht im fokalen Volumen eine Erhöhung des Brechungsindex des bestrahlten Substrates 10. Das bestrahlte Volumen hat nach dem Verfahren des Substrates unterhalb des Objektivs die Form eines Zylinders mit einem Durchmesser von etwa 6 um. Wie in Figur 3 gezeigt ist, hat dieser Zylinder einen elliptischen Querschnitt. In anderen Ausführungsformen der Erfindung kann der Querschnitt auch rund sein.

Durch die Erhöhung des Brechungsindex im bestrahlten Volumen entsteht an der Grenzfläche des Wellenleiters 3 Totalreflexion, sodass Licht im Wellenleiter 3 innerhalb des Substrates 10 geführt werden kann.

Sodann wird zumindest ein Bragg-Gitter 35 im Wellenleiter 3 angeordnet. Hierzu wird die Pulsenergie auf 1,06 pJ erhöht. Die Geschwindigkeit, mit welcher das Substrat unter dem Objektiv bewegt wird, wird so erhöht, dass die Bragg-Bedingung für die 6. Ordnung für den gewünschten Wellenlängenbereich angepasst wird. Auf diese Weise wird eine Mehrzahl von Raumbereichen bzw. Voxeln 355 in den Wellenleiter geschrieben, welche einen gegenüber dem Wellenleiter 3 weiter erhöhten Brechungsindex aufweisen. Die Abstände der Voxel definieren die Gitterkonstante des Bragg-Gitters.

Wie wiederum in Figur 3 ersichtlich ist, ist eine Symmetrieebene des Bragg-Gitters bzw. des Wellenleiters senkrecht zur Oberfläche des Substrates lokalisiert, d.h. die längere Achse 350 des elliptischen Querschnitts nimmt einen festen Winkel zum Normalenvektor der durch das Substrat 10 definierten Ebene an. Im dargestellten Ausführungsbeispiel beträgt der Winkel zwischen der längeren Achse 350 des elliptischen Querschnitts und dem Normalenvektor 0°, d.h. die längere Achse 350 des elliptischen Querschnitts und der Normalenvektor sind parallel. Eine weitere Symmetrieebene liegt parallel zur Oberfläche des Substrates. Wird eine Kraft in Richtung des Normalenvektors zur Oberfläche des Substrats appliziert, bleiben die Symmetrieebenen des Bragg-Gitters bzw. des Wellenleiters senkrecht bzw. parallel zur Oberfläche des Substrats. Dadurch kann bei der Verwendung von polarisiertem Licht die Erfassung der Beziehung zwischen der Größe der applizierten Kraft und dem Reflexionsverhalten des Bragg-Gitters mit höherer Genauigkeit erfolgen.

Es ist darauf hinzuweisen, dass in anderen Ausführungsformen der Erfindung auch eine Mehrzahl von Bragg-Gittern 35 in einem Wellenleiter 3 oder auch in einer Mehrzahl von Wellenleitern 3 vorhanden sein kann. Eine Mehrzahl von Bragg-Gittern 35 kann unterschiedliche Gitterkonstanten haben, sodass die räumliche Lage innerhalb des Substrates 10 im Wellenlängenmultiplex erfasst werden kann.

Wie Figur 4 zeigt, endet der Wellenleiter 3 in einer Mündung 31 an einer Seitenfläche des Substrates 10. Mit einem UV-aushärtenden, transparenten Klebstoff kann eine Glasfaser 7 an den Wellenleiter 3 kontaktiert werden. Die Glasfaser 7 kann in einigen Ausführungsformen der Erfindung eine Einmoden-Glasfaser sein. Insbesondere dann, wenn eine Mehrzahl von Bragg-Gittern 35 im Wellenleiter 3 angeordnet sind, kann die Glasfaser 7 auch eine Mehrmoden-Glasfaser sein.

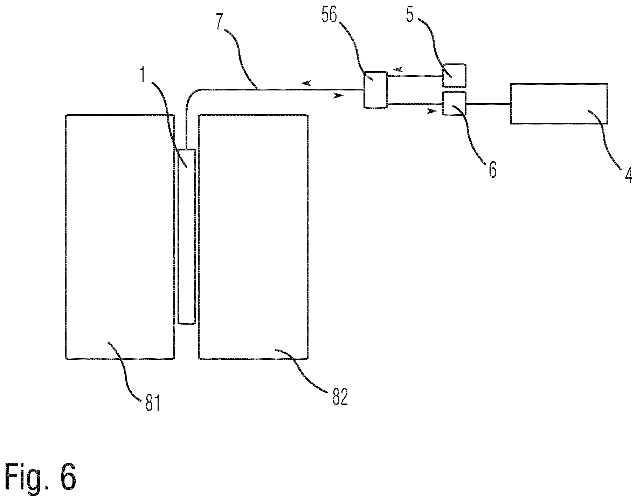

Anhand der Figur 6 wird die Erfassung einer Verformung bzw. einer einwirkenden Kraft mit der Messvorrichtung 1 näher erläutert. Im dargestellten Ausführungsbeispiel ist die Messvorrichtung 1 zwischen zwei Batteriezellen 81 und 82 angeordnet. Die beiden Batteriezellen 81 und 82 können prismatische Zellen sein oder auch Rundzellen. In diesem Fall liegt die Messvorrichtung 1 nur linienförmig an den beiden zylindrischen Gehäusen der Batteriezellen 81 und 82 an. Während eines Lade- oder Entladezyklus und/oder durch Alterung dehnen sich die Gehäuse der Batteriezellen 81 und 82 aus. Hierdurch wird eine Kraft auf die Messvorrichtung 1 ausgeübt, welche zu einer Verformung der Messvorrichtung 1 führt. Diese Verformung führt zu einer Änderung der Gitterkonstanten des Bragg-Gitters 35, welche mit der nachfolgend beschriebenen Vorrichtung erfasst werden kann. Die Messvorrichtung 1 dienst somit beispielhaft der Überwachung des Ladezustandes oder der Alterung der Batteriezellen 81 und 82.

In anderen Ausführungsformen der Erfindung kann die Messvorrichtung 1 statt zwischen die Batteriezellen 81 und 82 auch zwischen anderen mechanischen Komponenten angeordnet werden, beispielsweise Teilen einer Werkzeugmaschine oder eines Fahr- oder Flugzeuges.

Die Glasfaser 7 ist mit einem optischen Koppler oder Zirkulator 56 mit einer Lichtquelle 5 und einem Spektrometer 6 verbunden. Die Lichtquelle 5 kann beispielsweise ein Halbleiterlaser oder eine Superlumineszenzdiode sein. Diese sendet Licht über den Koppler bzw. Zirkulator 56 in die Glasfaser 7 und von dort in den Wellenleiter 3 im Substrat 10 der Messvorrichtung 1. Das am Bragg-Gitter 35 reflektierte Teilspektrum wird im Wellenleiter 3 reflektiert und erreicht wiederum über die Glasfaser 7 und den Koppler bzw. Zirkulator 56 das Spektrometer 6. Im Spektrometer 6 wird die Wellenlänge des reflektierten Lichtes erfasst und einer Auswerteeinrichtung 4 zugeführt, welche aus der reflektierten Wellenlänge die Verformung des Substrates 10 bzw. die auf das Substrat 10 einwirkende Kraft erfasst.

Figur 7 zeigt den Druck bzw. die einwirkende Kraft auf das Substrat 10 auf der Abszisse und die Wellenlänge des reflektierten Lichtes auf der Ordinate. Wie aus Figur 7 ersichtlich ist, besteht zwischen Wellenlänge und Kraft bzw. Druck ein linearer Zusammenhang. Dieser lineare Zusammenhang findet seine Ursache darin, dass der Wellenleiter 3 und das Substrat 10 aus dem im Wesentlichen identischen Material bestehen und somit den gleichen Elastizitätsmodul aufweisen. Durch die monolithische Integration des Wellenleiters 3 und des Bragg-Gitters 35 im Substrat 10 kann sich die mechanische Spannung homogen im Substrat 10 ausbreiten und somit eine einfache und zuverlässige Erfassung der Kraft- bzw. der Verformung ermöglichen.

Selbstverständlich ist die Erfindung nicht auf die dargestellten Ausführungsformen beschränkt. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Messvorrichtung (1) mit zumindest einem Substrat (10), welches ein Polymer oder ein Glas enthält oder daraus besteht, wobei im Substrat zumindest ein optischer Wellenleiter (3) eingeschrieben ist, in welchem zumindest ein Bragg-Gitter (35) mit einer vorgebbaren Gitterkonstanten angeordnet ist, wobei
die Messvorrichtung (1) weiterhin eine Auswerteeinrichtung (4) enthält, welche dazu eingerichtet ist, aus einer Änderung der Gitterkonstanten und/oder einer Änderung des Brechungsindex des Bragg-Gitters eine Verformung des Substrates und/oder eine auf das Substrat einwirkende Kraft zu bestimmen, **dadurch gekennzeichnet, dass** das Bragg-Gitter (35) und/oder der Wellenleiter einen elliptischen Querschnitt aufweist, und
die längere Achse (350) des elliptischen Querschnitts einen festen Winkel zum Normalenvektor der durch das Substrat (10) definierten Ebene einnimmt.

2. Messvorrichtung nach Anspruch 1, **dadurch gekennzeichnet, dass** das Substrat eine Dicke von weniger als 200 pm oder weniger als 120 pm oder weniger als 90 pm aufweist und/oder
dass das Substrat eine Dicke von mehr als 40 pm oder mehr als 50 pm oder mehr als 60 pm aufweist

3. Messvorrichtung nach Anspruch 1 oder 2, **dadurch gekennzeichnet, dass** das Substrat (10) eben ist oder
dass das Substrat (10) in einer oder mehreren Richtungen gekrümmt ist.

4. Messvorrichtung nach einem der Ansprüche 1 bis 3, **dadurch gekennzeichnet, dass** die längere Achse (350) parallel oder senkrecht zum Normalenvektor der durch das Substrat (10) definierten Ebene verläuft.

5. Messvorrichtung nach einem der Ansprüche 1 bis 4, **dadurch gekennzeichnet, dass** der Elastizitätsmodul des Wellenleiters (3) und des Substrates (10) im Wesentlichen identisch ist
und/oder dass der Wellenleiter (3) und das Bragg-Gitter (35) monolithisch im Substrates (10) integriert sind.

6. Messvorrichtung nach einem der Ansprüche 1 bis 5, weiterhin enthaltend eine Lichtquelle (5), mit welcher Licht in den Wellenleiter (3) einkoppelbar ist und/oder weiterhin enthaltend ein Spektrometer (6) mit welchem das am Bragg-Gitter (35) reflektierte Spektrum und/oder das durch das Bragg-Gitter (35) transmittierte Spektrum bestimmbar ist.

7. Messvorrichtung nach einem der Ansprüche 1 bis 6, **dadurch gekennzeichnet, dass** das Substrat ein Glas enthält oder daraus besteht oder
dass das Substrat ein Alumosilikatglas enthält oder daraus besteht.

8. Verfahren zur Erfassung einer Verformung und/oder einer einwirkenden Kraft
mit zumindest einer Messvorrichtung, enthaltend zumindest ein Substrat (10), welches ein Polymer oder ein Glas enthält oder daraus besteht, wobei im Substrat zumindest ein optischer Wellenleiter (3) eingeschrieben ist, in welchem zumindest ein Bragg-Gitter (35) mit einer vorgebbaren Gitterkonstanten angeordnet ist, wobei das Bragg-Gitter (35) und/oder der Wellenleiter (3) einen elliptischen Querschnitt aufweist, und die längere Achse (350) des elliptischen Querschnitts einen festen Winkel zum Normalenvektor der durch das Substrat (10) definierten Ebene einnimmt,
wobei das Substrat mit einer Kraft beaufschlagt wird, welche zumindest eine Komponente aufweist, welche parallel zum Normalenvektor des Substrates (10) verläuft und aus einer Änderung der Gitterkonstanten eine Verformung des Substrates und/oder die Größe der auf das Substrat einwirkenden Kraft bestimmt wird.

9. Verfahren nach Anspruch 8, **dadurch gekennzeichnet, dass** das am Bragg-Gitter (35) reflektierte Spektrum und/oder das durch das Bragg-Gitter (35) transmittierte Spektrum gemessen und die Verformung des Substrates und/oder die Größe der auf das Substrat einwirkenden Kraft aus dem gemessenen Spektrum bestimmt wird.

10. Verfahren nach Anspruch 8 oder 9, **dadurch gekennzeichnet, dass** das Substrat (10) in einer oder mehreren Richtungen gekrümmt ist und die Verformung einer zum Substrat komplementär gekrümmten Fläche bestimmt wird.

11. Verfahren nach einem der Ansprüche 8 bis 10, **dadurch gekennzeichnet, dass** ein uniaxialer Druck senkrecht zum Verlauf des Wellenleiters (3) gemessen wird.

12. Verfahren nach einem der Ansprüche 8 bis 11, **dadurch gekennzeichnet, dass** das Substrat (10) in einer oder mehreren Richtungen gekrümmt ist und die auf eine zum Substrat komplementär gekrümmte Fläche einwirkende Kraft bestimmt wird.

13. Verfahren zur Herstellung einer Messvorrichtung nach einem der Ansprüche 1 bis 7, mit folgenden Schritten:
Bereitstellen eines Substrates
Bestrahlen des Substrates mit Laserstrahlung, welche im Substratmaterial einen Fokuspunkt bildet und eine Pulslänge von etwa 50 fs bis etwa 500 fs aufweist
Bewegen des Substrates senkrecht zur Strahlausdehnung, sodass im bestrahlten Volumen des Substrates ein Wellenleiter entsteht
erneutes Bestrahlen des bestrahlten Volumens des Substrates, so dass im Wellenleiter eine Mehrzahl von Teilvolumina bzw. Voxeln (355) entsteht, welche einen gegenüber dem bestrahlten Volumen erhöhten Brechungsindex aufweisen.

14. Verfahren nach Anspruch 13, **dadurch gekennzeichnet, dass** die Laserstrahlung eine Pulsenergie von etwa 0,8 pJ bis etwa 1,1 pJ aufweist und/oder
dass die Repetitionsrate der Laserstrahlung zwischen etwa 4 kHz und etwa 6 kHz beträgt und/oder
dass die Laserstrahlung zirkular polarisiert ist und/oder dass die Laserstrahlung eine Wellenlänge von etwa 700 nm bis etwa 900 nm aufweist.
